# EUROPÄISCHE PATENTSCHRIFT

(11) **EP 3 828 477 B1**
(45) Veröffentlichungstag und Bekanntmachung des Hinweises auf die Patenterteilung: **28.02.2024**
(21) Anmeldenummer: 20209423.1
(22) Anmeldetag: 24.11.2020
(51) Int. Cl.: F24H 1/18, F28D 20/00, B33Y 10/00, B33Y 80/00

(54) **SCHICHTWEISE AUFGEBAUTER THERMISCHER SPEICHER**
THERMAL STORAGE DEVICE WITH LAYERED DESIGN
ACCUMULATEUR THERMIQUE FABRIQUÉ PAR COUCHES

(30) Priorität: 27.11.2019 DE 102019132111
(43) Veröffentlichungstag der Anmeldung: 02.06.2021
(73) Patentinhaber: Vaillant GmbH, 42859 Remscheid (DE)
(72) Erfinder: Ellinghaus, Gunnar, 42499 Hückeswagen (DE); Noll, Wolfgang, 42113 Wuppertal (DE); Ruthenberg, Christian, 42399 Wuppertal (DE)
(74) Vertreter: Popp, Carsten

(56) Entgegenhaltungen:
- US-A1- 2016 033 083
- US-A1- 2018 051 908
- US-A1- 2018 356 161

## Beschreibung

Die Erfindung betrifft einen thermischen Speicher, wie etwa einen Warmwasserspeicher, sowie ein Verfahren zur Herstellung eines thermischen Speichers.

Die Funktionsweise eines üblichen Warmwasserspeichers kann wie folgt beschrieben werden: Der Speicher ist nach Art eines geschlossenen Behälters ausgeführt, in dem sich eine Rohrschlange als Heizspirale befindet. Trinkwasser umfließt die Rohrschlange, in der sich wiederum Heizwasser befindet. Die Rohrschlange überträgt nun als Wärmetauscher die Heizwärme auf das Brauchwasser, nachströmendes kaltes Wasser wird bei Entnahme von Warmwasser ebenfalls aufgeheizt. Üblich sind beim Warmwasserspeicher zum einen eine sehr gute Dämmung, um Wärmeverluste gering zu halten, und zum anderen ein (permanentes) Temperaturniveau von mindestens 60°C, um die Gefahr von Legionellen abzuwehren.

Der geschlossenen Behälter wird häufig als Druckbehälter ausgeführt, der von einem zusätzlichen Außenmantel umgeben ist. Zur Erzielung einer ausreichenden Dämmung kommt in der Regel eine zwischen dem Druckbehälter und dem Außenmantel angeordnete Isolierung zum Einsatz. Aktuell werden entsprechende Speicher folglich aus mehreren Schichten verschiedener Materialien hergestellt. Dabei können zum Beispiel Stahl für den Druckbehälter, Polyurethan für die Isolierung und Eisen für den Außenmantel zum Einsatz kommen. Diese Materialen werden beispielsweise verwendet, um die Drücke halten zu können, Wärmeleitung zu reduzieren und das Innenleben des Speichers zu schützen.

Es hat sich jedoch gezeigt, dass durch die Kombination der verschiedenen Materialien das Recyclen des Speichers erschwert wird. Zudem können Wärmeverluste durch die Verwendung verschiedener Materialien erhöht sein. Diese könnten jedoch ggf. durch aufwendige Konstruktionen und/oder Produktionsschritte kompensiert werden. Ein weiterer Nachteil entsprechender Speicher kann in dem relativ hohen Gewicht gesehen werden, das insbesondere aus der Verwendung von Stahl für den Druckbehälter resultiert. Es wäre zwar denkbar, den Behälter zur Gewichtsreduktion als Kunststoffbehälter auszuführen, bekannte Kunststoffbehälter halten jedoch nur geringen Drücken stand.

Aus der US 2018/051908 A1 ist ein integrierter Wasserheizer bekannt. Aus der US 2018/356161 A1 ist ein integrierter Wärmetauscher und Kühlmittelreservoir bekannt. Aus der US 2016/033083 A1 ist eine dampfgekühlte abschirmende Auskleidung für die kryogene Lagerung in Verbunddruckbehältern bekannt.

Es ist daher Aufgabe der Erfindung, einen thermischen Speicher mit reduziertem Gewicht bereitzustellen, der gleichwohl ausreichend druckbeständig ist. Zudem soll der Speicher einfacher zu recyclen sein.

Diese Aufgaben werden durch einen thermischen Speicher sowie ein Verfahren gemäß den Merkmalen des unabhängigen Anspruchs gelöst. Vorteilhafte Ausgestaltungen ergeben sich durch die Merkmale der abhängigen Ansprüche.

Hierzu trägt ein thermischer Speicher bei, bei dem es sich um einen Pufferspeicher zur Zwischenspeicherung von Heizwasser einer Heizungsanlage oder um einen Warmwasserspeicher zur Speicherung von Trinkwasser handelt, zumindest aufweisend:
- mindestens eine innere Wand, die mindestens einen Raum zur Aufnahme eines zu speichernden Mediums begrenzt,
- mindestens eine äußere Wand, die zumindest abschnittsweise von der inneren Wand getrennt ist und die den thermischen Speicher nach außen begrenzt,
- eine thermische Isolierung, die zumindest in einem Teilbereich zwischen der inneren Wand und der äußeren Wand angeordnet ist,
wobei die innere Wand, die äußere Wand und die Isolierung gemeinsam schichtweise aufgebaut sind und wobei die Isolierung mindestens einen Hohlraum aufweist, in dem zumindest ein Gas oder ein Dämmmaterial angeordnet ist oder in dem ein Vakuum vorliegt.

Durch den schichtweisen Aufbau kann zum einen die Kraftaufnahme auf mehr Material (bzw. Komponenten) verteilt werden, welches gleichzeitig auch noch die Dämmung des Speichers unterstützt. Insbesondere können durch den gemeinsamen schichtweisen Aufbau alle Komponenten (innere Wand, äußere Wand, Isolierung) zumindest teilweise zur Kraftaufnahme und/oder Dämmung beitragen. Weiterhin kann mit dem schichtweisen Aufbau eine vorteilhaft hohe Gestaltungsfreiheit, insbesondere hinsichtlich der Querschnittsgeometrie und/oder Innenformgebung des Speichers erreicht werden, wodurch insgesamt Material eingespart werden kann. Somit kann der schichtweise aufgebaute thermische Speicher in vorteilhafter Weise mit reduziertem Gewicht, bei gleichwohl ausreichender Druckbeständigkeit, bereitgestellt werden. Zum anderen kann, insbesondere wenn für im Wesentlichen den gesamten schichtweisen Aufbau das gleiche Material verwendet wird, der Vorteil erreicht werden, dass der Speicher einfacher recycelt werden kann.

Erfindungsgemäss handelt es sich bei dem thermischen Speicher um einen Pufferspeicher zur Zwischenspeicherung von Heizwasser einer Heizungsanlage. Es ist weiter möglich, dass es sich bei dem thermischen Speicher um einen Warmwasserspeicher zur Speicherung von Trinkwasser handelt. Bei dem thermischen Speicher handelt es sich insbesondere um einen Warmwasserspeicher (bzw. Brauchwasserspeicher) oder einen Pufferspeicher (bzw. Heizwasserspeicher). Im Gegensatz zum Pufferspeicher, der üblicherweise zur Zwischenspeicherung von Heizwasser der Heizungsanlage dient, enthält ein Warmwasserspeicher - auch als Brauchwasserspeicher bekannt - in der Regel Trinkwasser (bzw. Brauchwasser). Dabei kann es sich grundsätzlich um einen direkt oder indirekt beheizten (Warmwasser-)Speicher handeln. Bevorzugt handelt es sich hier in diesem Zusammenhang jedoch um einen indirekt beheizten (Warmwasser-)Speicher.

Zur indirekten Beheizung wirkt der Warmwasserspeicher in der Regel mit einer Heizungsanlage zusammen, die beispielsweise einen mit einem fossilen Brennstoff, wie etwa Öl oder Gas, betriebenen Brenner zur Erwärmung eines in einem Heizwasserkreislauf fließenden Heizwassers enthält. Die Übertragung der Heizwärme erfolgt dabei üblicherweise über einen in den Speicher integrierten oder mit diesem zusammenwirkenden Wärmetauscher, der zumindest teilweise von dem Heizwasser durchströmt werden kann und dieses somit in Wärmeaustausch mit dem in dem Raum des Warmwasserspeichers gespeicherten Brauchwasser bringen kann. In diesem Zusammenhang kann der Wärmetauscher beispielsweise eine vorzugsweise in dem Raum oder um den Raum angeordnete Rohrschlange umfassen oder mittels eines Doppelmantels gebildet sein, bei dem das Heizwasser zwischen einem vorzugsweise den Raum begrenzenden Innenmantel und einem Außenmantel des Speichers strömen kann, um das in dem Raum befindliche Brauchwasser zu erwärmen.

Bei einem Pufferspeicher handelt es sich in der Regel um einen Wärmespeicher der Heizungsanlage. Er ist in diesem Zusammenhang in der Regel dazu eingerichtet Wärme der Heizungsanlage zwischenzeitlich zu speichern und bei Bedarf für den Verbrauch abzugeben. Der Speicher "puffert" in diesem Fall also Wärmeenergie in Form von heißem (Heiz-)Wasser, das beispielsweise für die Heizung und/oder die Erwärmung von Brauchwasser verwendet wird. Dies bedeutet mit anderen Worten insbesondere, dass im Falle eines Pufferspeichers in dem Raum ein Teil des Heizwassers selbst gespeichert wird. Somit ist ein Wärmetauscher in einem Pufferspeicher in der Regel nicht integriert.

Der Speicher umfasst mindestens eine innere Wand, die mindestens einen Raum zur Aufnahme eines zu speichernden Mediums begrenzt. Bei dem zu speichernden Medium handelt es sich um Brauchwasser oder Heizwasser.

Die innere Wand kann beispielsweise (als Tankwand) einen im Inneren des Speichers gebildeten Tank, insbesondere Drucktank bzw. Druckbehälter bilden. Der Tank kann dabei zum Beispiel eine zylindrische Grundform aufweisen. Darüber hinaus ist jedoch auch denkbar, dass die innere Wand mindestens einen Kanal umgibt, durch den das zu speichernde Medium strömen kann. Der Kanal kann in diesem Zusammenhang beispielsweise eine der (zwei) Seiten eines Wärmetauschers bilden. Dabei bildet der Kanal in der Regel die Kaltseite des Wärmetauschers. Der Kanal kann sich dabei insbesondere spiralförmig oder mäanderförmig durch zumindest einen Abschnitt des Speichers erstrecken. Der Raum kann dementsprechend beispielsweise das Innenvolumen eines Tanks bzw. Tankbehälters oder eines Kanals betreffen.

Der Speicher umfasst weiterhin mindestens eine äußere Wand, die zumindest abschnittsweise von der inneren Wand getrennt ist und die den thermischen Speicher nach au-ßen begrenzt. Dies bedeutet mit anderen Worten insbesondere, dass die äußere Wand die Außenwand bzw. die äußerste Wand des Speichers bildet. Diese ist in der Regel (in der Art einer Doppelwand) über einen überwiegenden Teil ihrer Erstreckung von der inneren Wand getrennt bzw. beabstandet. Gleichwohl kann die äußere Wand die innere Wand zumindest abschnittsweise umgeben. Vorzugsweise bildet die äußere Wand zumindest abschnittsweise einen Außenmantel des Speichers.

Der Speicher umfasst zudem eine thermische Isolierung, die zumindest in einem Teilbereich zwischen der inneren Wand und der äußeren Wand angeordnet ist. Die Isolierung kann beispielsweise die Form eines Isolierkörpers haben. Insbesondere füllt die Isolierung einen überwiegenden Anteil des zwischen der inneren Wand und der äußeren Wand gebildeten Zwischenraumes. Dabei kann die Isolierung beispielsweise in der Art eines Wabenkörpers aufgebaut sind. Alternativ oder kumulativ kann die Isolierung beispielsweise mit einem Dämmstoff zur thermischen Dämmung gebildet oder Hohlräume der Isolierung damit zumindest teilweise gefüllt sein.

Die innere Wand, die äußere Wand und die Isolierung sind vorzugsweise mittels eines additiven Fertigungsverfahrens gemeinsam schichtweise aufgebaut. Dies bedeutet mit anderen Worten insbesondere, dass die innere Wand, die äußere Wand und die Isolierung parallel zueinander und/oder gleichzeitig miteinander, Schicht für Schicht aufgebaut werden. Dabei wird üblicherweise eine Materialschicht über einer zuvor aufgebauten Materialschicht angeordnet und mit dieser fest bzw. strukturell verbunden. Für den schichtweisen Aufbau wird vorzugsweise ein additives Fertigungsverfahren, wie beispielsweise ein 3D-Druckverfahren verwendet. Als 3D-Druckverfahren kann beispielsweise ein kombiniertes 3D-Druckverfahren und/oder ein Mehrkomponentendruckverfahren durchgeführt werden. Hierdurch können zum Beispiel unterschiedliche Materialien schichtweise aufgebaut (und dabei miteinander verbunden) werden. So kann zum Beispiel ein Kunststoffdruck mit dem Druck anderer Materialen erfolgen. Als Druckmaterialen kommen beispielsweise Kunststoffe (Polymere) und/oder metallische und/oder keramische Materialien in Betracht.

Weiterhin bevorzugt ist der gesamte Speicher aus einem gedruckten Körper, insbesondere einem 3D-gedruckten Kunststoffkörper hergestellt.

Weiterhin sind die innere Wand, die äußere Wand und die Isolierung auch strukturell miteinander verbunden, zum Beispiel über Stege oder mindestens einen Endabschnitt (wie etwa eine Bodenplatte und/oder eine Deckplatte). Vorzugsweise sind die innere Wand und die äußere Wand über die Isolierung miteinander strukturell verbunden. Beispielsweise kann die Isolierung zum einen fest bzw. strukturell mit der inneren Wand und zum anderen fest bzw. strukturell mit der äußeren Wand verbunden sein. Durch den schichtweisen Aufbau lassen sich solche strukturellen Verbindungen besonders vorteilhaft bilden, insbesondere ohne Fügestellen (die ggf. eine Schwachstelle darstellen könnten) und/oder an Stellen, die für herkömmliche Verbindungsmitteln nicht zugänglich wären. Dies trägt ebenfalls zu einer verbesserten Kraftaufnahme, bei gleichwohl möglicher Materialersparnis bei.

Bevorzugt sind die innere Wand, die äußere Wand und die Isolierung dabei mit dem gleichen Material schichtweise aufgebaut. Besonders bevorzugt sind die innere Wand, die äußere Wand und die Isolierung einstückig gebildet. Dies trägt zu einer besonders vorteilhaften Kraftaufnahme, bei gleichwohl möglicher Materialersparnis bei. Insbesondere werden somit die innere Wand, die äußere Wand und die Isolierung in die Kraftaufnahme mit einbezogen. Darüber hinaus können, insbesondere wenn als Material ein Kunststoff verwendet wird, dabei auch die innere Wand, die äußere Wand und die Isolierung an der Wärmedämmung teilnehmen.

Nach einer vorteilhaften Ausgestaltung wird vorgeschlagen, dass mindestens ein fluidischer Anschluss des thermischen Speichers gemeinsam mit der inneren Wand, der äußeren Wand und der Isolierung schichtweise aufgebaut ist. Der fluidiche Anschluss kann beispielsweise ein Wasseranschluss, wie etwa ein Brauchwasseranschluss oder ein Heizwasseranschluss sein. In der Regel sind mindestens zwei Anschlüsse vorgesehen, üblicherweise mindestens ein Zulauf und mindestens ein Ablauf. Insbesondere wenn in dem Speicher auch ein Wärmetauscher realisiert ist, sind in der Regel mehr als zwei Anschlüsse (mindestens zwei für jede Seite des Wärmetauschers) vorhanden.

Nach einer weiteren vorteilhaften Ausgestaltung wird vorgeschlagen, dass zumindest ein Teil einer Armatur des thermischen Speichers gemeinsam mit der inneren Wand, der äu-ßeren Wand und der Isolierung schichtweise aufgebaut ist. Die Armatur kann den mindestens einen fluidischen Anschluss umfassen. Dies bedeutet mit anderen Worten insbesondere, dass der mindestens eine fluidische Anschluss auch ein Bestandteil der Armatur sein kann. Alternativ oder kumulativ kann die Armatur mindestens ein Einstellmittel, wie etwa ein Ventil umfassen, mittels welchem ein Zufluss zu dem Speicher, ein Abfluss aus dem Speicher und/oder ein Druck in dem Speicher eingestellt oder geregelt werden kann. Es können grundsätzlich nur ein Grundkörper der Armatur oder die gesamte Armatur (ggf. mit deren Funktionselementen) gemeinsam mit der inneren Wand, der äußeren Wand und der Isolierung schichtweise aufgebaut sein.

Erfindungsgemäss wird vorgeschlagen, dass die Isolierung mindestens einen Hohlraum aufweist, in dem zumindest ein Gas oder ein Dämmmaterial angeordnet ist. In diesem Zusammenhang kann die Isolierung beispielsweise einen Körper aus thermisch isolierendem Material umfassen, in dem (insbesondere in dessen Querschnitt) eine Vielzahl von Hohlräumen, beispielsweise in der Art von Waben, Poren oder dergleichen vorgesehen sind. Als Gas kommt grundsätzlich Luft, Stickstoff und/oder CO₂ in Betracht, bevorzugtes Gas ist Luft. Bei dem Dämmmaterial kann es sich beispielsweise um ein Kunststoffdämmmaterial handeln, wie etwa gebildet mit einem Polyurethan-Schaum, Silikagel (Mikroporöse Kieselsäure) und/oder EPDM (Kautschuk).

Nach einer alternativen erfindungsgemässen Ausgestaltung wird vorgeschlagen, dass die Isolierung mindestens einen Hohlraum aufweist, in dem ein Vakuum vorliegt. Zur Herstellung eines entsprechenden Vakuums kann beispielsweise vorgesehen sein, dass in dem Bereich, in dem der schichtweise Aufbau erfolgt, zumindest während des Aufbauens der Isolierung, ein Vakuum erzeugt wird. Alternativ oder kumulativ ist auch denkbar, dass der Hohlraum nach dem schichtweisen Aufbau evakuiert wird. Ein solches Vakuum kann insbesondere zur Unterbindung von Konvektion genutzt werden. Darüber hinaus kann damit auch eine Vakuumwärmedämmung realisiert werden. Dies bezeichnet eine thermische Dämmung, bei welcher der durch die Gasmoleküle der Luft bedingte Wärmetransport reduziert ist.

Nach einer weiteren vorteilhaften Ausgestaltung wird vorgeschlagen, dass mindestens ein Strömungsleitelement des thermischen Speichers gemeinsam mit der inneren Wand, der äußeren Wand und der Isolierung schichtweise aufgebaut ist. Das Strömungsleitelement kann beispielsweise eine strömungstechnische Verbindung zwischen innerer Wand und äußerer Wand bereitstellen und dabei gegebenenfalls die Isolierung durchdringen. Alternativ oder kumulativ kann vorgesehen sein, dass als Strömungsleitelemente insbesondere komplexe Geometrien in den Speicher eingearbeitet werden, die beispielsweise zu einem verbesserten Einund/oder Ausströmen des Mediums in den bzw. aus dem Raum beitragen. Weiterhin kann als Strömungsleitelement mindestens eine strömungstechnische Unterstützung direkt in den Raum mit integriert sein, beispielsweise indem sie von der inneren Wand nach innen hervorsteht.

Nach einer weiteren vorteilhaften Ausgestaltung wird vorgeschlagen, dass mindestens ein Teil eines in dem thermischen Speicher integrierten Wärmetauschers gemeinsam mit der inneren Wand, der äußeren Wand und der Isolierung schichtweise aufgebaut ist. Ein solches Teil kann beispielsweise mindestens ein spiralförmig verlaufendes Rohr oder ein Rohrbündel sein, das in dem und/oder an dem Raum angeordnet ist, insbesondere so, dass ein durch das Rohr bzw. Rohrbündel strömendes Medium Wärme mit einem in dem Raum befindlichen Medium austauschen kann. So kann beispielsweise Heizwasser aus einer Heizung durch das Rohr bzw. Rohrbündel strömen. Alternativ oder kumulativ kann das Teil des Wärmetauschers ein Kanal sein, durch den ein Heizmedium (beispielsweise Heizwasser) oder ein anderes Wärmeaustauschmedium strömt. Dieser (zweite) Kanal verläuft insbesondere so durch den Speicher, dass er in Wärmeaustausch mit einem (ersten) Kanal steht, durch den das zu speichernde Medium strömen kann. Dieser (zweite) Kanal kann in diesem Zusammenhang beispielsweise die andere der (zwei) Seiten eines Wärmetauschers bilden. Dabei bildet dieser (zweite) Kanal in der Regel die Heißseite des Wärmetauschers. Der (zweite) Kanal kann sich dabei insbesondere spiralförmig oder mäanderförmig durch zumindest einen Abschnitt des Speichers erstrecken.

Nach einer weiteren vorteilhaften Ausgestaltung wird vorgeschlagen, dass die innere Wand, die äußere Wand und die Isolierung mit einem Kunststoff gebildet sind. Bevorzugt sind die innere Wand, die äußere Wand und die Isolierung (einstückig) mit dem gleichen Kunststoff gebildet. Als Kunststoff kommt insbesondere einer der folgenden in Betracht: Polypropylen, Polyamid, PVC, Polyethylen, Polybuthylen, GFK und/oder CFK. Denkbar ist auch eine Kombination von zwei oder mehr dieser Stoffe. Weiterhin ist (alternativ zum Kunststoff) auch denkbar die innere Wand, die äußere Wand und die Isolierung mit einem metallischen Material zu bilden. Als metallisches Material kommt beispielsweise Aluminium und/oder Stahl in Betracht.

Wenn mindestens ein Teil eines in dem thermischen Speicher integrierten Wärmetauschers gemeinsam mit der inneren Wand, der äußeren Wand und der Isolierung schichtweise aufgebaut ist kann zudem vorgesehen sein, dass auch der Teil des Wärmetauschers mit Kunststoff, insbesondere dem gleichen Kunststoff aufgebaut ist. Denkbar ist jedoch auch, dass zumindest ein Teil des so gebildeten Wärmetauschers mit einem metallischen Material, wie etwa Kupfer aufgebaut ist. Damit kann zum Beispiel ein Kupferrohrwärmeübertrager in die sonstige Konstruktion integriert sein.

Nach einem weiteren Aspekt wird ein Verfahren zur Herstellung eines hier beschriebenen thermischen Speichers angegeben, bei dem mindestens eine innere Wand, die mindestens einen Raum zur Aufnahme eines zu speichernden Mediums begrenzt, mindestens eine äußere Wand, die zumindest abschnittsweise von der inneren Wand getrennt ist und die den thermischen Speicher nach außen begrenzt, sowie eine thermische Isolierung, die zumindest in Teilbereichen zwischen der inneren Wand und der äußeren Wand angeordnet ist, gemeinsam schichtweise aufgebaut werden.

Die im Zusammenhang mit dem Speicher erörterten Details, Merkmale und vorteilhaften Ausgestaltungen können entsprechend auch bei dem hier vorgestellten Verfahren auftreten und umgekehrt. Insoweit wird auf die dortigen Ausführungen zur näheren Charakterisierung der Merkmale vollumfänglich Bezug genommen.

Die Erfindung wird nun anhand der Figuren detailliert erläutert.

Es stellen dar:
Figur 1: ein Beispiel für einen schichtweisen Aufbau eines hier vorgeschlagenen, thermischen Speichers in seitlicher Schnittdarstellung,
Figur 2: ein Beispiel für einen schichtweisen Aufbau eines weiteren hier vorgeschlagenen, thermischen Speichers in seitlicher Schnittdarstellung, und
Figur 3: ein Beispiel für einen weiteren hier vorgeschlagenen, thermischen Speicher in geschnittener Draufsicht.

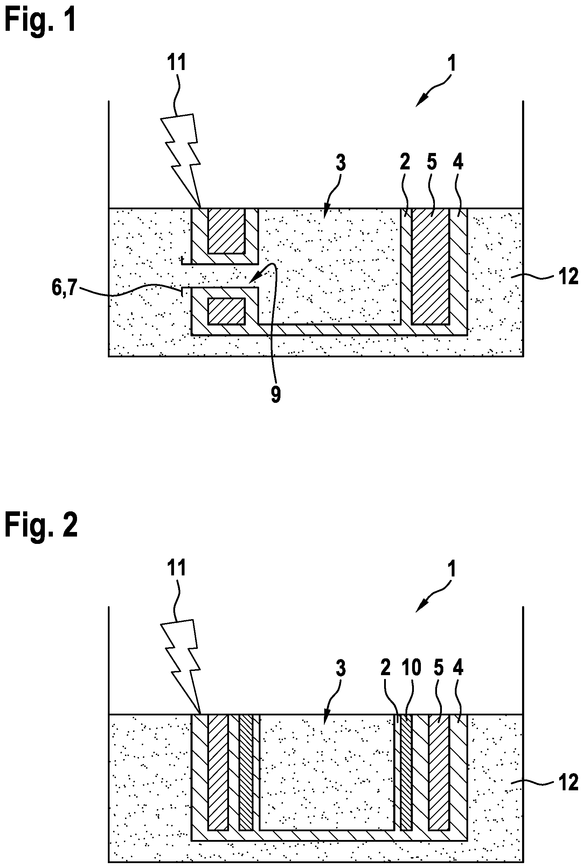

Figur 1 zeigt ein Beispiel für einen schichtweisen Aufbau eines hier vorgeschlagenen, thermischen Speichers 1 in seitlicher Schnittdarstellung. Beispielsweise werden hier ein Laser 11 und ein Pulverbett 12 zur additiven Herstellung eines thermischen Speichers 1 verwendet. Hierbei werden mindestens eine innere Wand 2, die mindestens einen Raum 3 zur Aufnahme eines zu speichernden Mediums begrenzt, mindestens eine äußere Wand 4, die zumindest abschnittsweise von der inneren Wand 2 getrennt ist und die den thermischen Speicher 1 nach außen begrenzt, sowie eine thermische Isolierung 5, die zumindest in Teilbereichen zwischen der inneren Wand 2 und der äußeren Wand 4 angeordnet ist, gemeinsam schichtweise aufgebaut.

Dies erfolgt hier beispielhaft durch selektives Aufschmelzen des Pulverbettes 12 mittels des Lasers 11. Die innere Wand 2, die äußere Wand 4 und die Isolierung 5 sind hier beispielhaft mit einem Kunststoff gebildet. Dementsprechend umfasst das Pulverbett 12 ein Kunststoffpulver, welches mit dem Laser 11 selektiv aufgeschmolzen wird, um die Pulverpartikel zu entsprechenden Strukturen zu verbinden.

Zudem ist hier beispielhaft ein fluidischer Anschluss 6 des thermischen Speichers 1 gemeinsam mit der inneren Wand 2, der äußeren Wand 4 und der Isolierung 5 schichtweise aufgebaut. Dieser Anschluss 6 ist Teil einer Armatur 7. Figur 1 veranschaulicht weiterhin, dass beispielsweise ein Strömungsleitelement 9 des thermischen Speichers 1 gemeinsam mit der inneren Wand 2, der äußeren Wand 4 und der Isolierung 5 schichtweise aufgebaut sein kann.

Figur 2 zeigt ein Beispiel für einen schichtweisen Aufbau eines weiteren hier vorgeschlagenen, thermischen Speichers 1 in seitlicher Schnittdarstellung. In dem Speicher 1 gemäß Figur 2 ist beispielhaft ein Teil eines in dem thermischen Speicher 1 integrierten Wärmetauschers 10 gemeinsam mit der inneren Wand 2, der äußeren Wand 4 und der Isolierung 5 schichtweise aufgebaut.

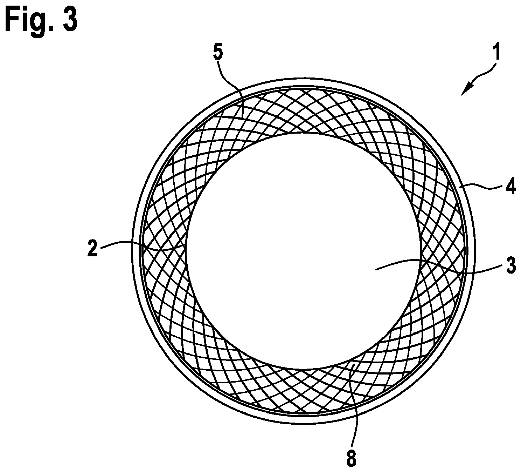

Figur 3 zeigt ein Beispiel für einen weiteren hier vorgeschlagenen, thermischen Speicher 1 in geschnittener Draufsicht. Der thermischer Speicher 1 umfasst eine innere Wand 2, die einen Raum 3 zur Aufnahme eines zu speichernden Mediums (hier zum Beispiel Wasser) begrenzt, eine äußere Wand 4, die von der inneren Wand 2 getrennt ist und die den thermischen Speicher 1 nach außen begrenzt sowie eine thermische Isolierung 5, die in dem hier beispielhaft ringförmigen Bereich zwischen der inneren Wand 2 und der äußeren Wand 4 angeordnet ist. Die innere Wand 2, die äußere Wand 4 und die Isolierung 5 sind gemeinsam schichtweise aufgebaut. In der Darstellung gemäß Figur 3 ist auch zu erkennen, dass die Isolierung 5 beispielsweise mindestens einen Hohlraum 8 aufweisen kann, in dem zumindest ein Gas oder ein Dämmmaterial angeordnet ist. Alternativ oder kumulativ kann in zumindest einem Hohlraum 8 der Isolierung ein Vakuum vorliegen.

Somit kann ein thermischer Speicher mit reduziertem Gewicht bereitgestellt werden, der gleichwohl ausreichend druckbeständig ist. Zudem kann der Speicher einfacher zu recyclen sein.

### Bezugszeichenliste

- 1: Thermischer Speicher
- 2: Innere Wand
- 3: Raum
- 4: Äußere Wand
- 5: Isolierung
- 6: Anschluss
- 7: Armatur
- 8: Hohlraum
- 9: Strömungsleitelement
- 10: Wärmetauscher
- 11: Laser
- 12: Pulverbett

## Patentansprüche

1. Thermischer Speicher (1), bei dem es sich um einen Pufferspeicher zur Zwischenspeicherung von Heizwasser einer Heizungsanlage oder um einen Warmwasserspeicher zur Speicherung von Trinkwasser handelt, zumindest aufweisend:
- mindestens eine innere Wand (2), die mindestens einen Raum (3) zur Aufnahme eines zu speichernden Mediums begrenzt,
- mindestens eine äußere Wand (4), die zumindest abschnittsweise von der inneren Wand (2) getrennt ist und die den thermischen Speicher (1) nach außen begrenzt,
- eine thermische Isolierung (5), die zumindest in einem Teilbereich zwischen der inneren Wand (2) und der äußeren Wand (4) angeordnet ist,
**dadurch gekennzeichnet, dass** die innere Wand (2), die äußere Wand (4) und die Isolierung (5) gemeinsam schichtweise aufgebaut sind, wobei die Isolierung (5) mindestens einen Hohlraum (8) aufweist, in dem zumindest ein Gas oder ein Dämmmaterial angeordnet ist oder in dem ein Vakuum vorliegt.

2. Thermischer Speicher (1) nach Anspruch 1, **dadurch gekennzeichnet, dass** der thermische Speicher (1) ein indirekt beheizter Warmwasserspeicher ist, der zur indirekten Beheizung mit einer Heizungsanlage zusammenwirkt.

3. Thermischer Speicher (1) nach einem der vorhergehenden Ansprüche, **dadurch gekennzeichnet, dass** die innere Wand (2) einen im Inneren des Speichers (1) gebildeten Druckbehälter bildet.

4. Thermischer Speicher (1) nach einem der vorhergehenden Ansprüche, **dadurch gekennzeichnet, dass** die innere Wand (2), die äußere Wand (4) und die Isolierung (5) mittels eines additiven Fertigungsverfahrens gemeinsam schichtweise aufgebaut sind.

5. Thermischer Speicher (1) nach einem der vorhergehenden Ansprüche, **dadurch gekennzeichnet, dass** mindestens ein fluidischer Anschluss (6) des thermischen Speichers (1) gemeinsam mit der inneren Wand (2), der äußeren Wand (4) und der Isolierung (5) schichtweise aufgebaut ist.

6. Thermischer Speicher (1) nach einem der vorhergehenden Ansprüche, **dadurch gekennzeichnet, dass** zumindest ein Teil einer Armatur (7) des thermischen Speichers (1) gemeinsam mit der inneren Wand (2), der äußeren Wand (4) und der Isolierung (5) schichtweise aufgebaut ist.

7. Thermischer Speicher (1) nach einem der vorhergehenden Ansprüche, **dadurch gekennzeichnet, dass** mindestens ein Strömungsleitelement (9) des thermischen Speichers (1) gemeinsam mit der inneren Wand (2), der äußeren Wand (4) und der Isolierung (5) schichtweise aufgebaut ist.

8. Thermischer Speicher (1) nach einem der vorhergehenden Ansprüche, **dadurch gekennzeichnet, dass** mindestens ein Teil eines in dem thermischen Speicher integrierten Wärmetauschers (10) gemeinsam mit der inneren Wand (2), der äußeren Wand (4) und der Isolierung (5) schichtweise aufgebaut ist.

9. Thermischer Speicher (1) nach einem der vorhergehenden Ansprüche, **dadurch gekennzeichnet, dass** die innere Wand (2), die äußere Wand (4) und die Isolierung (5) mit einem Kunststoff gebildet sind.

10. Verfahren zur Herstellung eines thermischen Speichers (1) nach einem der vorhergehenden Ansprüche, bei dem mindestens eine innere Wand (2), die mindestens einen Raum (3) zur Aufnahme eines zu speichernden Mediums begrenzt, mindestens eine äußere Wand (4), die zumindest abschnittsweise von der inneren Wand (2) getrennt ist und die den thermischen Speicher (1) nach außen begrenzt, sowie eine thermische Isolierung (5), die zumindest in Teilbereichen zwischen der inneren Wand (2) und der äußeren Wand (4) angeordnet ist, gemeinsam schichtweise aufgebaut werden.

## Claims

1. A thermal storage device (1), which is a buffer tank for the intermediate storage of heating water in a heating system or a hot water tank for storing drinking water, comprising at least:
- at least one inner wall (2), which delimits at least one chamber (3) for receiving a medium to be stored,
- at least one outer wall (4), which is separated at least in some sections from the inner wall (2) and which delimits the thermal storage device (1) from the outside,
- a thermal insulation (5), which is arranged at least in a partial area between the inner wall (2) and the outer wall (4),
**characterised in that** the inner wall (2), the outer wall (4) and the insulation (5) are constructed together in layers, wherein the insulation (5) has at least one cavity (8) in which at least a gas or an insulating material is arranged or in which there is a vacuum.

2. The thermal storage device (1) according to claim 1, **characterised in that** the thermal storage device (1) is an indirectly heated hot water storage tank which interacts with a heating system for indirect heating.

3. The thermal storage device (1) according to any one of the preceding claims, **characterised in that** the inner wall (2) forms a pressure container formed inside the storage device (1).

4. The thermal storage device (1) according to any one of the preceding claims, **characterised in that** the inner wall (2), the outer wall (4) and the insulation (5) are constructed together in layers by means of an additive manufacturing process.

5. The thermal storage device (1) according to any one of the preceding claims, **characterised in that** at least one fluidic connection (6) of the thermal storage device (1) is constructed in layers together with the inner wall (2), the outer wall (4) and the insulation (5).

6. The thermal storage device (1) according to any one of the preceding claims, **characterised in that** at least a portion of a fitting (7) of the thermal storage device (1) is constructed in layers together with the inner wall (2), the outer wall (4) and the insulation (5).

7. The thermal storage device (1) according to any one of the preceding claims, **characterised in that** at least one flow guide element (9) of the thermal storage device (1) is constructed in layers together with the inner wall (2), the outer wall (4) and the insulation (5).

8. The thermal storage device (1) according to any one of the preceding claims, **characterised in that** at least a portion of a heat exchanger (10) integrated into the thermal storage device is constructed in layers together with the inner wall (2), the outer wall (4) and the insulation (5).

9. The thermal storage device (1) according to any one of the preceding claims, **characterised in that** the inner wall (2), the outer wall (4) and the insulation (5) are made of plastic.

10. A method for producing a thermal storage device (1) according to any one of the preceding claims, in which at least one inner wall (2), which delimits at least one chamber (3) for receiving a medium to be stored, at least one outer wall (4), which is separated at least in some sections from the inner wall (2) and which delimits the thermal storage device (1) from the outside, and a thermal insulation (5), which is arranged at least in partial areas between the inner wall (2) and the outer wall (4), are constructed together in layers.

## Revendications

1. Accumulateur thermique (1) qui est un accumulateur tampon pour l'accumulation intermédiaire d'eau de chauffage d'une installation de chauffage ou un accumulateur d'eau chaude pour l'accumulation d'eau potable, présentant au moins :
- au moins une paroi intérieure (2) qui délimite au moins un espace (3) destiné à recevoir un fluide à accumuler,
- au moins une paroi extérieure (4) qui est séparée au moins par sections de la paroi intérieure (2) et qui délimite l'accumulateur thermique (1) vers l'extérieur,
- une isolation thermique (5) qui est disposée au moins dans une zone partielle entre la paroi intérieure (2) et la paroi extérieure (4),
**caractérisé en ce que** la paroi intérieure (2), la paroi extérieure (4) et l'isolation (5) sont construites conjointement par couches, dans lequel l'isolation (5) présente au moins une cavité (8) dans laquelle au moins un gaz ou un matériau isolant est disposé ou dans laquelle un vide est présent.

2. Accumulateur thermique (1) selon la revendication 1, **caractérisé en ce que** l'accumulateur thermique (1) est un accumulateur d'eau chaude chauffé indirectement qui interagit avec une installation de chauffage pour le chauffage indirect.

3. Accumulateur thermique (1) selon l'une quelconque des revendications précédentes, **caractérisé en ce que** la paroi intérieure (2) forme un récipient sous pression formé à l'intérieur de l'accumulateur (1).

4. Accumulateur thermique (1) selon l'une quelconque des revendications précédentes, **caractérisé en ce que** la paroi intérieure (2), la paroi extérieure (4) et l'isolation (5) sont construites conjointement par couches au moyen d'un procédé de fabrication additive.

5. Accumulateur thermique (1) selon l'une quelconque des revendications précédentes, **caractérisé en ce qu'**au moins un raccord fluidique (6) de l'accumulateur thermique (1) est construit par couches conjointement avec la paroi intérieure (2), la paroi extérieure (4) et l'isolation (5).

6. Accumulateur thermique (1) selon l'une quelconque des revendications précédentes, **caractérisé en ce qu'**au moins une partie d'une armature (7) de l'accumulateur thermique (1) est construite par couches conjointement avec la paroi intérieure (2), la paroi extérieure (4) et l'isolation (5).

7. Accumulateur thermique (1) selon l'une quelconque des revendications précédentes, **caractérisé en ce qu'**au moins un élément de guidage d'écoulement (9) de l'accumulateur thermique (1) est construit par couches conjointement avec la paroi intérieure (2), la paroi extérieure (4) et l'isolation (5).

8. Accumulateur thermique (1) selon l'une quelconque des revendications précédentes, **caractérisé en ce qu'**au moins une partie d'un échangeur de chaleur (10) intégré dans l'accumulateur thermique est construite par couches conjointement avec la paroi intérieure (2), la paroi extérieure (4) et l'isolation (5).

9. Accumulateur thermique (1) selon l'une quelconque des revendications précédentes, **caractérisé en ce que** la paroi intérieure (2), la paroi extérieure (4) et l'isolation (5) sont formées avec une matière plastique.

10. Procédé de fabrication d'un accumulateur thermique (1) selon l'une quelconque des revendications précédentes, dans lequel au moins une paroi intérieure (2), qui délimite au moins un espace (3) destiné à recevoir un fluide à accumuler, au moins une paroi extérieure (4), qui est séparée au moins par sections de la paroi intérieure (2) et qui délimite l'accumulateur thermique (1) vers l'extérieur, ainsi qu'une isolation thermique (5), qui est disposée au moins dans des zones partielles entre la paroi intérieure (2) et la paroi extérieure (4), sont construites conjointement par couches.
